# FASCICULE DE BREVET EUROPEEN

(11) **EP 1 966 005 B1**
(45) Date de publication et mention de la délivrance du brevet: **11.04.2012**
(21) Numéro de dépôt: 06831107.5
(22) Date de dépôt: 13.11.2006
(51) Int. Cl.: B60R 9/06, B60R 11/06

(54) **COFFRE LOGISTIQUE**
LOGISTIKBOX
LOGISTICS BOX

(30) Priorité: 21.11.2005 FR 0511743
(43) Date de publication de la demande: 10.09.2008
(73) Titulaire: NEXTER Systems, 42328 Roanne (FR)
(72) Inventeur: TIMMER, Bernard, F-78700 Conflans Saint-Honorine (FR); PATRY, Jean-Noël, F-78960 Voisins le Bretonneux (FR)
(74) Mandataire: Célanie, Christian
(86) Numéro de dépôt international: PCT/FR2006/002507
(87) Numéro de publication internationale: WO 2007/060307

(56) Documents cités:
- DE-A1- 19 650 817
- FR-A- 724 191
- US-A1- 2005 061 841

## Description

Le domaine technique de l'invention est celui des coffres logistiques et en particulier des coffres destinés à être fixés à un véhicule notamment militaire.

Les coffres sont un accessoire classique permettant d'accroître les capacités d'emport d'un véhicule.

La plupart du temps ils ne peuvent être disposés à l'intérieur de celui-ci et doivent pouvoir être fixés à l'extérieur du véhicule d'une façon simple et fiable.

Il n'existe pas à ce jour de coffre universel pouvant être fixé sur n'importe quel véhicule.

Les solutions connues mettent en oeuvre des coffres spécifiques dont la définition doit être faite par le fournisseur du véhicule lui-même. La géométrie de ces coffres doit tenir compte des caractéristiques du véhicule et des dimensions des emplacements disponibles sur ses parois externes. Un tel coffre est divulgué par FR724191.

De telles solutions ne sont pas satisfaisantes. Chaque véhicule comportant ses propres coffres, la complexité logistique se trouve donc accrue. Il est ainsi nécessaire de gérer plusieurs modèles de coffres ou bien de prévoir sur le terrain des étapes longues et fastidieuses de transvasement d'un type d'emballage vers un autre.

L'invention a pour but de proposer un coffre logistique permettant de pallier de tels inconvénients.

Ainsi le coffre logistique selon l'invention peut être adapté relativement aisément d'un type de véhicule à un autre et il peut être mis en place de plusieurs façons différentes ce qui augmente sa polyvalence.

Ainsi l'invention a pour objet un coffre logistique selon la revendication 1 destiné à être rendu solidaire d'une structure, telle un véhicule, et comportant un moyen d'accrochage destiné à coopérer avec un moyen complémentaire porté par la structure, coffre ayant une géométrie comportant plusieurs faces et caractérisé en ce qu'il comporte au moins deux portes disposées chacune sur une face distincte.

Une telle disposition permet de faciliter l'accès à l'intérieur du coffre et autorise une mise en place suivant au moins deux orientations différentes.

Avantageusement les portes pourront être disposées sur des faces contiguës et perpendiculaires l'une à l'autre.

Avec une telle disposition, lorsque le coffre est fixé suivant une orientation donnée, une porte peut servir à l'accès normal et l'autre à la vidange rapide.

Le coffre comporte au moins deux moyens d'accrochage distincts permettant de rendre le coffre solidaire de la structure suivant au moins deux orientations différentes.

Au moins une porte pourra être maintenue en position fermée par une tige coulissante.

Avantageusement, une porte pourra présenter une poignée comportant un profil en forme de goulotte pouvant recevoir une barre de transport.

Dans ce cas, la face parallèle à la porte dotée d'une poignée de transport pourra, elle aussi, comporter un moyen de levage, disposé sensiblement à la même hauteur que la poignée, et pouvant recevoir lui aussi une barre de transport.

Ce moyen de levage pourra être est constitué par un anneau.

La face extérieure d'au moins une porte pourra être recouverte par une couche d'un élastomère.

D'autres avantages de l'invention apparaîtront à la lecture de la description qui va suivre d'un mode particulier de réalisation, description faite en référence aux dessins annexés et dans desquels :
- la figure 1 montre un coffre selon l'invention en perspective trois quart avant et toutes portes fermées,
- la figure 2. montre ce même coffre en perspective trois quart arrière,
- la figure 3 est une vue analogue à la figure 1, une première porte étant ouverte,
- la figure 4 montre ce même coffre une deuxième porte étant ouverte,
- La figure 5 montre ce même coffre suivant un exemple de fixation sur une paroi,
- la figure 6 est une vue des moyens d'accrochages portés par la paroi,
- les figures 7 et 8 sont analogues à la figure 5 et montrent le coffre avec l'une ou l'autre porte ouverte.

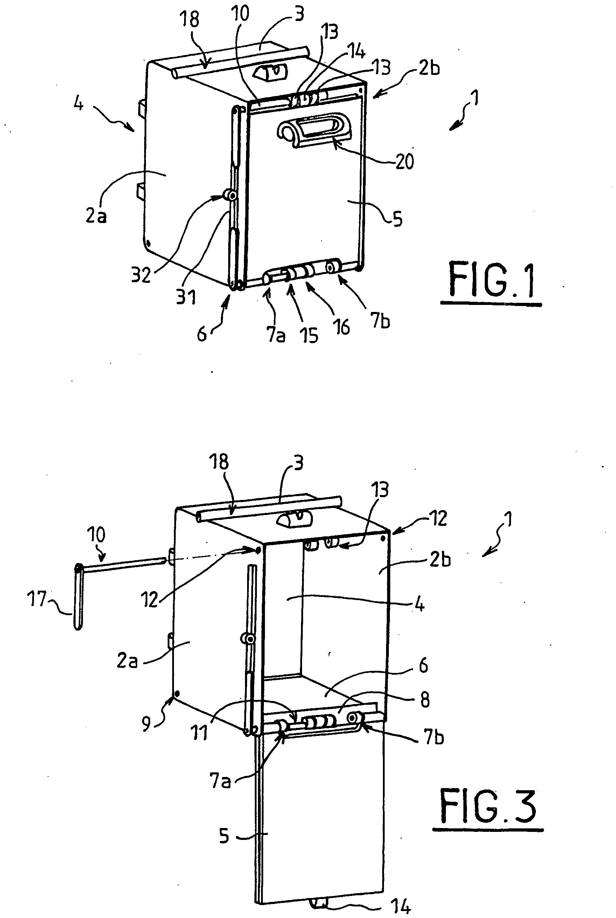

En se reportant à la figure 1, un coffre logistique 1 selon l'invention a une forme parallélépipédique et comporte donc six faces. Il comprend une ossature mécano soudée qui est formée par : les faces latérales 2a et 2b, la face supérieure 3 et la face arrière 4. Sur cette structure mécano soudée qui forme le corps du coffre sont fixées deux portes pivotantes permettant toutes deux d'accéder à l'intérieur du coffre: une porte avant 5 et une porte inférieure 6.

Chaque porte constitue une face du parallélépipède. La porte avant 5 est parallèle à la face arrière 4, la porte inférieure 6 est parallèle à la face supérieure 3. Les portes sont donc disposées sur des faces contiguës et perpendiculaires l'une à l'autre.

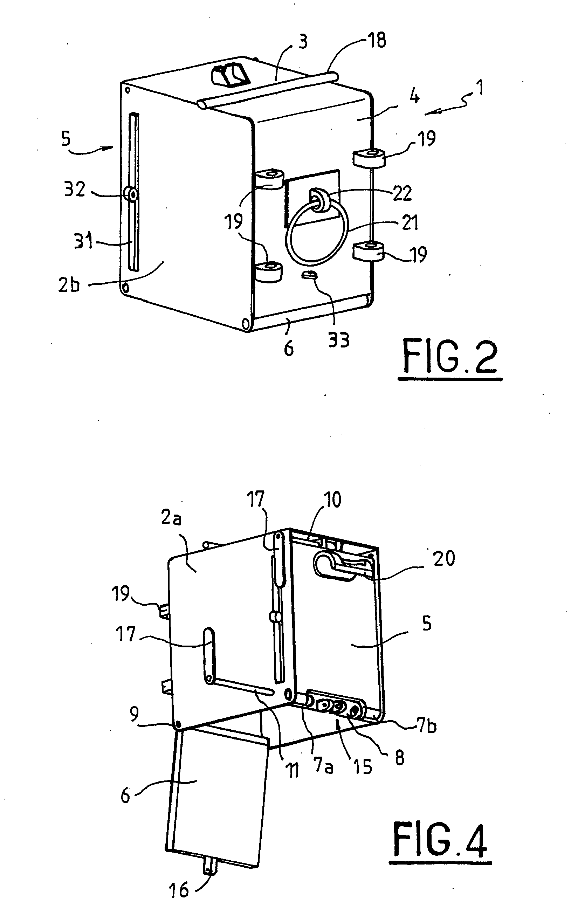

Chaque porte est montée pivotante par rapport à une charnière. Ainsi la porte avant 5 pivote par rapport à des gonds 7a, 7b qui sont solidaires d'une poutre 8 qui relie les faces latérales 2a et 2b (voir figures 3 et 4).

La porte inférieure 6 pivote par rapport à une charnière 9 qui est constituée par un axe reliant les faces latérales 2a et 2b (voir figure 4).

Par ailleurs chaque porte est maintenue en position fermée par une tige coulissante 10 ou 11.

La tige 10 se positionne ainsi au travers des perçages 12 des faces latérales 2a,2b (voir figure 3). Elle traverse les deux languettes 13 portées par la face supérieure 3 ainsi que la languette 14 portée par la porte avant 5, lorsque cette dernière languette se positionne entre les languettes 13 (figure 1).

D'une façon analogue la tige 11 se positionne au travers des gonds 7a et 7b et elle traverse les deux languettes 15 portées par la poutre 8 ainsi que la languette 16 portée par la porte inférieure 6, lorsque cette dernière languette se positionne entre les languettes 15 (voir figures 1 et 4).

Les deux tiges 10 et 11 portent chacune un bras 17 qui facilite leur extraction. Des moyens de verrouillage (non représentés) par exemple des cadenas pourront être mis en place pour empêcher l'ouverture du coffre. Ces cadenas seront par exemple introduits dans un trou porté par l'extrémité de la tige 10 ou 11 lorsque celle ci est mise en place et qu'elle dépasse légèrement de la face latérale 2b.

Le coffre selon l'invention est représenté sur les figures 1 à 4 suivant une première orientation. Ce coffre est fixé à une structure telle une paroi de véhicule (non représentée) par des moyens d'accrochage.

Suivant ce mode particulier de réalisation on a représenté un exemple d'un moyen d'accrochage qui est solidaire de la face supérieure 3 du coffre. Ce moyen comporte ici une barre transversale 18 qui est soudée à la face supérieure 3. Cette barre dépasse légèrement de part et d'autre du coffre au niveau des faces latérales 2a et 2b. Elle est destinée à coopérer avec un moyen d'accrochage complémentaire (non représenté) solidaire de la structure du véhicule (non représenté). On pourra par exemple prévoir une griffe d'accrochage qui emprisonnera les extrémités de la barre 18.

On a également représenté sur les figures un autre exemple d'un moyen d'accrochage qui est solidaire de la face arrière 4. Ce moyen comprend ici quatre oreilles 19 régulièrement réparties (figure 2). Ces oreilles sont percées et peuvent coopérer avec un moyen complémentaire (non représenté) solidaire de la structure du véhicule (non représenté). On pourra par exemple prévoir sur le véhicule des oreilles analogues qui se positionneront en dessous des oreilles 19 et on placera entre chaque oreille des tiges ou des boulons de verrouillage.

On voit donc qu'il est possible de fixer le coffre selon l'invention suivant l'orientation verticale telle que représentée aux figures 1 à 4.

Suivant les contraintes liées au véhicules, cette fixation pourra donc se faire, soit au niveau de la face arrière 4, soit au niveau de la face supérieure 3.

Lorsque le coffre est ainsi fixé en position verticale la porte avant 5 permet d'accéder d'une façon classique à son contenu.

Lorsqu'il est nécessaire de vider rapidement le contenu du coffre 1, il suffit d'ouvrir la porte inférieure 6. Tout le contenu du coffre est alors libéré et tombe au sol.

A titre de variante on pourra recouvrir la face extérieure de la porte inférieure 6 par une couche d'un élastomère. Une telle variante permettra, lorsqu'on décroche le coffre 1 disposé en position verticale, de le protéger des effets dus au choc sur le sol.

On constate sur les figures 1 et 4 que la porte avant 5 présente une poignée 20 comportant un profil en forme de goulotte. La poignée 20 est soudée à la porte 5. Le profil en goulotte permet de positionner sous la poignée 20 une barre de transport (non représentée).

La face arrière 4 qui est parallèle à la porte avant 5 comporte par ailleurs un anneau 21 qui est fixé à la face arrière 4 par une patte 22 soudée à la face 4.

Cet anneau 21 est positionné de telle sorte que, lorsqu'on introduit dans l'anneau une autre barre de transport, cette dernière se trouve sensiblement à la même hauteur que la barre de transport positionnée sous la poignée 20.

Il est ainsi possible de transporter un coffre plein, d'une façon sûre, avec quatre porteurs.

Suivant une autre caractéristique de l'invention les moyens d'accrochage sont conçus pour permettre de rendre le coffre solidaire de la structure suivant au moins deux orientations différentes.

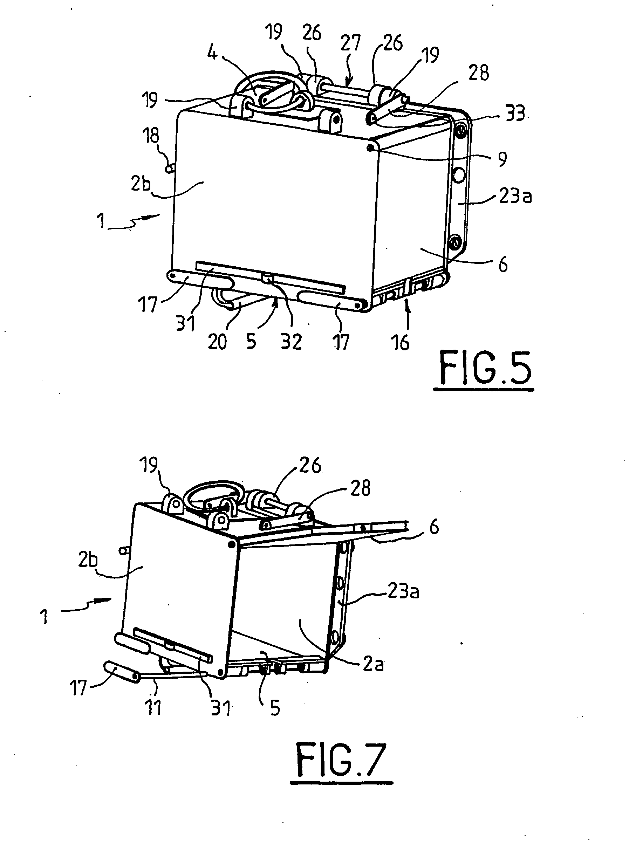

Les figures 5 à 8 montrent le même coffre 1 disposé d'une façon horizontale.

La porte inférieure 6 se trouve ainsi disposée sur la droite des figures 5, 7 et 8 alors que la porte avant 5 se trouve disposée en dessous et constitue le fond du coffre 1.

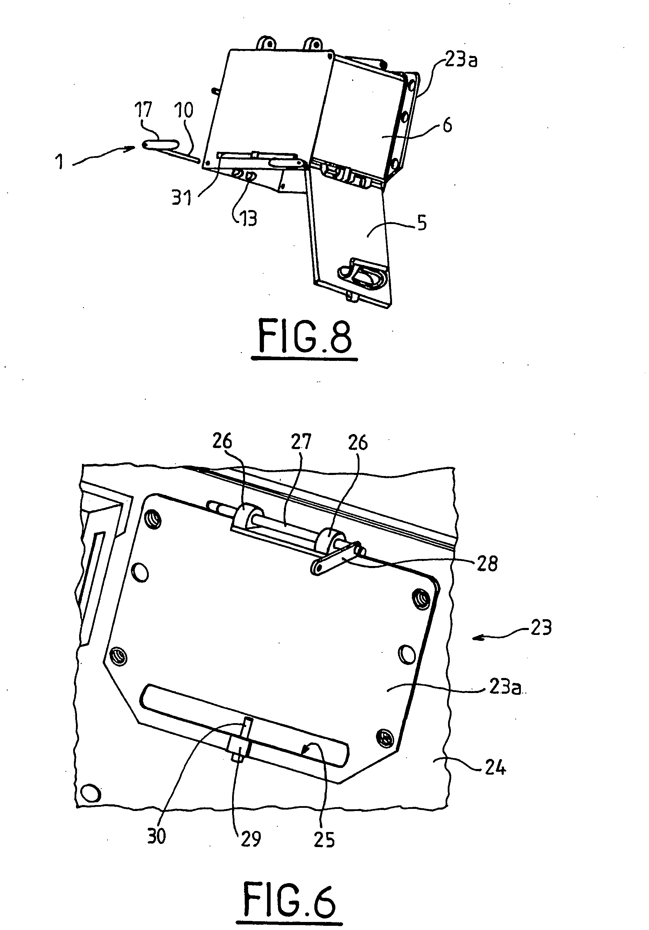

La figure 6 montre le moyen d'accrochage complémentaire 23 qui est solidaire de la paroi 24 d'un véhicule. Ce moyen est ici constitué par une tôle 23a vissée sur le véhicule et qui comporte à sa partie inférieure une lumière 25 sensiblement rectangulaire. La tôle 23a porte à sa partie supérieure deux oreilles 26 dans lesquelles se positionne une tige 27 portant un levier 28.

La plaque 23a elle-même porte par ailleurs un plot 29 qui est positionné sensiblement au niveau du milieu de la lumière 25. Un doigt 30 amovible peut être positionné dans le plot 29.

On remarque sur les différentes figures que le coffre 1 porte au niveau de chaque face latérale 2a et 2b une réglette soudée 31 portant un oeilleton 32.

Lors du montage du coffre 1 dans sa position horizontale on positionne une réglette 31 au niveau de la lumière 25.

Une telle disposition permet de donner un appui au coffre ce qui facilite le montage. Lorsque le coffre est ainsi positionné, les oreilles 19 de sa face arrière 4 se positionnent de part et d'autre des oreilles 26 de la plaque 23a (voir figures 5 et 7). On introduit alors la tige 27 au travers des trous des oreilles 19 et 26 ce qui assure la solidarisation du coffre et de la plaque 23a.

L'extrémité du levier 28 se positionne alors en regard d'une patte 33 solidaire de la face arrière 4 (figure 5). Il est alors possible de mettre en place un moyen de verrouillage (tel un cadenas) permettant d'empêcher tout démontage du coffre 1.

Après mise en place de la tige 26 on positionnera le doigt 30 dans l'oeilleton 32 et le plot 29 ce qui complètera le verrouillage du coffre.

Dans cette position horizontale c'est la porte inférieure 6 qui permet d'accéder d'une façon classique au contenu du coffre 1 (figure 7).

Lorsqu'il est nécessaire de vider rapidement le contenu du coffre 1, il suffit d'ouvrir la porte 5. Tout le contenu du coffre est alors libéré et tombe au sol (figure 8).

On voit qu'en fonction des contraintes liées au véhicule il est possible de placer la porte 6 du côté droit ou bien du côté gauche. En effet les moyens d'accrochage sont symétriques, la face arrière 4 porte quatre oreilles 19 identiques et chaque face latérale 2a, 2b porte une réglette 31.

Le coffre selon l'invention comporte ainsi une unique enceinte accessible selon l'une ou l'autre des portes, en fonction de la disposition du coffre.

Le coffre selon l'invention peut ainsi être positionné suivant trois orientations différentes, une orientation verticale et deux orientations horizontales. Dans tous les cas les fonctionnalités d'ouverture normale et de vidange rapide sont assurées.

L'invention a été ici décrite dans le cas de la fixation du coffre sur une paroi de véhicule. Il est bien entendu que le coffre selon l'invention peut être fixé à tout type de structure fixe ou mobile, terrestre, aérienne ou navale.

Les coffres logistiques peuvent ainsi être standardisés et être mis en oeuvre dans tous types de matériels. On simplifie donc énormément l'approvisionnement des troupes.

## Revendications

1. Coffre logistique (1) destiné à être rendu solidaire d'une structure, telle un véhicule, et comportant un moyen d'accrochage destiné à coopérer avec un moyen complémentaire porté par la structure, le coffre délimitant une unique enceinte et ayant une géométrie comportant plusieurs faces (2a, 2b, 3, 4, 5, 6), le coffre comportant au moins deux portes (5, 6) disposées chacune sur une face distincte, chaque porte pouvant donner accès à l'intérieur du coffre, **caractérisé en ce qu'**il comporte au moins deux moyens d'accrochage distincts (18, 19) permettant de rendre le coffre solidaire de la structure suivant au moins deux orientations différentes dont une orientation horizontale et une orientation verticale.

2. Coffre logistique selon la revendication 1, **caractérisé en ce que** les portes (5, 6) sont disposées sur des faces contiguës et perpendiculaires l'une à l'autre.

3. Coffre logistique selon la revendication 1 ou 2, **caractérisé en ce qu'**au moins une porte (5, 6) est maintenue en position fermée par une tige coulissante (10, 11).

4. Coffre logistique selon une des revendications 1 à 3, **caractérisé en ce qu'**une porte (5) présente une poignée (20) comportant un profil en forme de goulotte pouvant recevoir une barre de transport.

5. Coffre logistique selon la revendication 4, **caractérisé en ce que** la face (4) parallèle à la porte (5) dotée d'une poignée de transport (20) comporte, elle aussi, un moyen de levage (21), disposé sensiblement à la même hauteur que la poignée, et pouvant recevoir lui aussi une barre de transport.

6. Coffre logistique selon la revendication 5, **caractérisé en ce que** le moyen de levage est constitué par un anneau (21).

7. Coffre logistique selon une des revendications 1 à 6, **caractérisé en ce que** la face extérieure d'au moins une porte (5,6) est recouverte par une couche d'un élastomère.

## Claims

1. A logistic container (1) intended to be made integral with a structure, such as a vehicle, and incorporating clasping means intended to cooperate with matching means carried by the structure, the container being of a geometry with several faces (2a, 2b, 3, 4, 5, 6), the container comprising incorporates at least two opening flaps (5, 6) each arranged on a separate face, each flaps allowing access to the inside of the container, **characterised in that** it comprises at least two separate clasping means (18, 19) enabling the container to be made integral with the structure in at least two different orientations one of which being horizontal and the other one being vertical.

2. A logistic container according to Claim 1, **characterised in that** the opening flaps (5, 6) are arranged on contiguous faces perpendicular to one another.

3. A logistic container according to Claim 1 or 2, wherein at least one opening flap (5, 6) is held in the closed position by a sliding rod (10, 11).

4. A logistic container according to one of Claims 1 to 3, **characterised in that** one opening flap (5) has a handle (20) incorporating a profile in a chute shape able to receive a carrying bar.

5. A logistic container according to Claim 4, **characterised in that** the face (4) parallel to the opening flap (5) fitted with a carrying bar (20) also incorporates lifting means (21), arranged substantially at the same height as the handle and also able to receive a carrying bar.

6. A logistic container according to Claim 5, **characterised in that** the lifting means are constituted by a ring (21).

7. A logistic container according to one of Claims 1 to 6, **characterised in that** the exterior face of at least one opening flap (5, 6) is coated by a layer of elastomer.

## Patentansprüche

1. Logistikkasten (1), der dafür vorgesehen ist, fest mit einer Struktur, wie einem Fahrzeug, verbunden zu werden, umfassend ein Mittel zur Befestigung, das dafür vorgesehen ist, mit einem komplementären Mittel zusammen zu wirken, das von der Struktur getragen wird, wobei der Kasten ein einziges Gehäuse begrenzt und eine Geometrie aufweist, welche mehrere Flächen (2a, 2b, 3, 4, 5, 6) umfasst, wobei der Kasten wenigstens zwei Türen (5, 6) umfasst, die jeweils an einer unterschiedlichen Fläche angeordnet ist, wobei jede Tür Zugang in das Innere des Kastens gewähren kann, **dadurch gekennzeichnet, *dass*** er wenigstens zwei unterschiedliche Mittel zur Befestigung (18, 19) umfasst, die es ermöglichen, den Kasten fest mit der Struktur zu verbinden gemäß wenigstens zweier verschiedener Orientierungen, einer horizontalen Orientierung und einer vertikalen Orientierung.

2. Logistikkasten nach Anspruch 1, **dadurch gekennzeichnet, dass** die Türen (5, 6) an aneinander grenzenden und senkrecht zueinander stehenden Flächen angeordnet sind.

3. Logistikkasten nach Anspruch 1 oder 2, **dadurch gekennzeichnet, dass** wenigstens eine Tür (5, 6) durch eine gleitende Stange (10, 11) in geschlossener Position gehalten wird.

4. Logistikkasten nach einem der Ansprüche 1 bis 3, **dadurch gekennzeichnet, dass** eine Tür (5) einen Handgriff (20) aufweist, der ein Profil in Form einer Ablaufrinne umfasst, welches eine Transportstange aufnehmen kann.

5. Logistikkasten nach Anspruch 4, **dadurch gekennzeichnet, dass** die Fläche (4), die parallel zur Tür (5), welche mit einem Transport-Handgriff (20) versehen ist, verläuft, selbst auch ein Mittel zum Anheben (21) aufweist, welches im wesentlichen auf der selben Höhe wie der Handgriff angeordnet ist und welches auch eine Transportstange aufnehmen kann.

6. Logistikkasten nach Anspruch 5, **dadurch gekennzeichnet, dass** das Mittel zum Anheben von einem Ring (21) gebildet wird.

7. Logistikkasten nach einem der Ansprüche 1 bis 6, **dadurch gekennzeichnet, dass** die äußere Fläche wenigstens einer Tür (5, 6) mit einer Schicht eines Elastomers überzogen ist.
